Europäisches Patentamt

European Patent Office

Office européen des brevets

(11) Publication number: **0 205 784**
**A2**

(12) # EUROPEAN PATENT APPLICATION

(21) Application number: **86104659.7**

(22) Date of filing: **05.04.86**

(51) Int. Cl.⁴: **H01M 4/36 , H01M 6/18**

(30) Priority: **28.06.85 US 749711**

(43) Date of publication of application:
**30.12.86 Bulletin 86/52**

(84) Designated Contracting States:
**BE DE FR GB**

(71) Applicant: **UNION CARBIDE CORPORATION**
**39 Old Ridgebury Road**
**Danbury Connecticut 06817(US)**

(72) Inventor: **Vourlis, Harry**
**16613 Delaware Avenue**
**Lakewood, OH 44107(US)**

(74) Representative: **Görtz, Dr. Fuchs, Dr.**
**Luderschmidt Patentanwälte**
**Sonnenberger Strasse 100 Postfach 26 26**
**D-6200 Wiesbaden(DE)**

(54) **A solid state cell employing a cathode of molybdenum trisulfide and manganese dioxide and/or antimony trisulfide.**

(57) A solid cathode comprising $MoS_3$ in conjunction with $MnO_2$ and/or $Sb_2S_3$ for use in solid state cell systems.

EP 0 205 784 A2

## A SOLID STATE CELL EMPLOYING A CATHODE OF $MoS_3$ WITH $MnO_2$ AND/OR $Sb_2S_3$

### Field of the Invention

The invention relates to a solid state cell employing a solid cathode of $MoS_3$ along with $MnO_2$ and/or $Sb_2S_3$.

### Background of the Art

Ionic conductivity is usually associated with the flow of ions through a liquid solution of salts. In the vast majority of practical uses of ionic conductors, i.e., as electrolytes for dry cell batteries, the liquid solution is immobilized in the form of a paste or gelled matrix or is absorbed in a separator to overcome the difficulties associated with handling and packaging a liquid. However, even after immobilization, the system is still subject to possible leakage, has a limited shelf life due to drying out or crystallization of the salts and is suitable for use only within a limited temperature range corresponding to the liquid range of the electrolyte. In addition, the use of a large volume of immobilizing material has hindered the aims of miniaturization.

In attempting to overcome the shortcomings of the liquid systems, investigators have surveyed a large number of solid compounds hoping to find compounds which are solid at room temperature and have ionic conductances approaching those exhibited by the commonly used liquid systems. Such compounds have specific conductances at room temperature (20°C.) in the range of $10^{-2}$ to $10^{-15}$ ohm$^{-1}$ cm$^{-1}$ as compared to aqueous solutions of salts which typically have a specific conductance of 0.5 to 0.05 ohm$^{-1}$ cm$^{-1}$.

Improved microelectronic circuit designs have generally decreased the current requirements for electronic devices. This in turn has enhanced the applicability of solid electrolyte power sources which usually can only deliver currents in the microampere range. These solid electrolyte systems have the inherent advantages of being free of electrolyte leakage and internal gassing problems due to the absence of a liquid phase and corrosion phenomena. In addition, they also have a much longer shelf life than the conventional liquid electrolyte power sources.

Gutman et al, J. Electrochem. Soc., 114, 323 - (1967) discloses solid state cells utilizing cathodes of electronically conducting charge transfer complexes and anodes of selected divalent metals. U.S. Patent 3,660,163 discloses solid state lithium-iodine primary cells employing a lithium anode, a solid state lithium halide electrolyte and a conductive cathode of organic material, such as polycyclic aromatic compounds, organic polymers, heterocyclic nitrogen-containing compounds, and the like, and iodine. U.S. Patent 3,660,164 discloses solid state cells utilizing as a cathode a charge transfer complex in which the acceptor component is the halogen and the donor component is an organic compound, typically aromatic or heterocyclic.

U.S. Patent 4,377,624 discloses cathodes comprising one or more metal chalcogenides wherein the ionic and electronic conductivity of the metal chalcogenides ranges between $10^{-10}$ to $10^{-2}$ ohm$^{-1}$ cm$^{-1}$ at room temperature.

U.S. Patent 4,086,404 describes a method of preparing active electrode material for loading into porous electrically conductive substrates. Examples of contemplated active materials recited in this reference include the chalcogenides, i.e. the oxides, sulfides and selenides of metal such as iron, cobalt, nickel, copper, lead, zinc, antimony, and manganese.

U.S. Patent 4,385,103 discloses the use of a cathode comprising $Sb_2S_3$ in a physical mixture with a carbonaceous conductor for cells employing organic solvents.

U.S. Patent 3,959,012 discloses the use of a metal chalcogenide, such as $Sb_2S_3$, in conjunction with a metal halide in order to form a suitable cathode for solid electrolyte cells.

Although various solid cathode materials are recited in the art for use in various cell systems, an object of the present invention is to provide a novel cathode for use in solid electrolyte cell systems employing solid electrolytes such as $P_2S_5 \bullet Li_2S \bullet LiI$ as disclosed in U.S. Patent 4,331,750 and $LiI \bullet Li_2S \bullet SiS_2$ as disclosed in U.S. Patent 4,465,746. The disclosure in U.S. Patents 4,331,750 and 4,465,746 are incorporated herein by reference.

Another object of the present invention is to provide a solid state cathode for solid state cell systems in which the cathode comprises $MoS_3$ - (molybdenum trisulfide) in conjunction with $MnO_2$ - (manganese dioxide) and/or $Sb_2S_3$ (antimony trisulfide).

The foregoing and additional objects will become more fully apparent from the following description.

### Summary of the Invention

The invention relates to a solid state cell employing an anode, a solid electrolyte and a solid cathode comprising $MoS_3$ in conjunction with a material selected from the group consisting of $MnO_2$, $SB_2S_3$ and mixtures thereof.

The MoS₃ material for use in this invention is preferably amorphous $MoS_3$. Cathode limited lithium test cells employing an electrolyte of 1,3-dioxolane, 1,2-dimethoxyethane, 3-methyl-2-oxazolidone, 3,5-dimethylisoxazole, and $LiCF_3SO_3$ added salt and an amorphous $MoS_3$ cathode was discharged across a 10 kohm load. The cathode was found to be electro-active and capable of discharge approaching the 3 electron $MoS_3$ level at 0.2 mA/cm² to a 1.2 volt cutoff. Compatible cells were produced using crystalline $MoS_3$ in place of the amorphous $MoS_3$ and when the cells were discharged across a load, the crystalline $MoS_3$ cathode displayed very limited electro-activity in an nonaqueous system. Therefore it is believed that amorphous $MoS_3$ would also perform much better in solid state electrolyte systems and thus the preferred embodiment of this invention would use amorphous $MoS_3$ rather than crystalline $MoS_3$.

The $MoS_3$ material can be prepared thermally by decomposition of $(NH_4)_2MoS_4$ (ammonium thiomolybdate) as is generally known in the art. The $MoS_3$ can be mixed with $MnO_2$ and/or $Sb_2S_3$ to form a homogeneous mixture.

Preferably, the cathode materials should be mixed with some solid electrolyte, a conductive agent such as graphite, carbon or the like and a binder such as Teflon (trademark for polytetrafluoroethylene), ethylene acrylic acid copolymer or the like. If desired $TiS_2$ (titanium disulfide), while having electrochemical activity, can be incorporated into the cathode to serve as a conductor, binder, or molding aid. Thus, $TiS_2$ can be employed as the conductive agent and/or binder of the cathode.

Anode materials suitable for use with the solid cathode of this invention include lithium, lithium alloys, silver, sodium, potassium, and rubidium. The preferred anode material are lithium and lithium alloys.

Solid electrolytes suitable for use with the solid cathode of this invention include the conductive vitreous cathode compositions disclosed in U.S. Patent No. 4,331,750 and the compositions disclosed in U.S. Patent No. 4,465,746. The solid cathodes disclosed in U.S. Patent No. 4,331,750 have the general formula:

$$aP_2S_5, bLi_2S, cLiX$$

where:

X represents chlorine, bromine or iodine:

c is greater than or equal to 0;

the ratio $b/(a+b)$ lies between 0.61 and 0.70; and

the ratio $c/(a+b+c)$ is less than or equal to a limit which corresponds to solubility in the vitreous phase of LiX in the composition $aP_2S_5$, $bLi_2S$.

The solid electrolytes disclosed in U.S. Patent No. 4,465,746 have the general formula:

$$SiS_2 \; xLi_2S, \; yLiI$$

where:

x is from 0.8 to 1.5,

y is from 0 to about 2, and

wherein said composition has a conductivity of at least $0.75 \times 10^{-4}$ $ohm^{-1}$ $cm^{-1}$ at 25°C.

Also suitable solid electrolytes for use in this invention are the solid vitreous lithium cation conductors of the composition:

$$aX, bLi_2S, \; Y$$

where

X is selected from the group consisting of $P_2S_5$ and $SiS_2$;

a is from about 0.5 to about 3;

b is from 0.25 to 2; and

Y is an oxygen-containing lithium compound such as $Li_2CO_3$, $Li_2O$, LiOH, $Li_2SiO_3$, $Li_2SO_4$ and $Li_4SiO_4$; and

wherein said composition has a conductivity of at least $0.75 \times 10^{-4}$ $ohm^{-1}$ $cm^{-1}$ at 25°C. These solid cathodes are disclosed in a copending U.S. Patent Application, Serial Number ........, filed on ...... in the name of James Robert Akridge. The disclosure in this U.S. patent application is incorporated herein by reference.

Additional solid electrolytes suitable for use in this invention are the vitreous material disclosed in U.S. Patent No. 4,513,070, said U.S. Patent being incorporated herein by reference. The vitreous materials forming the solid electrolytes have a general formula:

$$xA_aR_b - yN_mR_c - zN_nY_p$$

wherein A is Si, Ge, P, S, B, Nb, As, V, Cr or Mo; R is O, S or Se; N is Li, Na, K or Ag and Y is I, Br, Cl, F, $ClO_4$, $CF_3SO_3$, SCN or $SO_4$ with the provisio that the material contain at least two salts NY. The a, b; m, c; and n, p represent the indices corresponding to the stoichiometry of the constituents in a given group and x, y and z, whose sum is equal to 1, represent the indices corresponding to the overall molar fractions respectively of the compound or compounds forming the former system, the modifier system and the doping salt of the material. The value of these indices being compatible with the vitreous range of a given material.

The preferred solid electrolytes are

$2.5LiI\bullet Li_4P_2S_7$, $0.75LiI\bullet Li_2SiS_3$,

$0.1875Li_2CO_3\bullet Li_2SiS_3$,

$0.25LiBr\bullet 0.1875Li_2CO_3\bullet Li_2SiS_3$,

$0.375Li_2O\bullet Li_2SiS_3$, $0.75LiOH\bullet Li_2SiS_3$,

$0.5LiBr\bullet 0.375Li_2CO_3\bullet Li_2SiS_3$, and

$0.375Li_2SiO_3\bullet Li_2SiS_3$. The most preferred solid electrolytes are $2.5LiI\bullet Li_4P_2S_7$ and $0.75LiI\bullet Li_2SiS_3$.

It is believed that some forms of solid electrolytes would not perform in an acceptable manner in conjunction with the solid cathode of this invention. For example, $\beta$-$Al_2O_3$ should not be employed in cells that are expected to operate at ambient temperature unless a liquid alloy metal or a layer of organic liquid electrolyte is used between the anode and the $\beta$-$Al_2O_3$ (reference:Solid Electrolytes, ed. S. Geller, p. 135).

In assembling the components of the cell of this invention, it is preferable to use the isostatic compression technique disclosed in U.S. Patent No. 4,477,545, said U.S Patent being incorporated herein by reference.

EXAMPLE

Several 0.787 inch diameter by 0.063 inch high coin cells were constructed. The cell has a cathode as shown in the Table along with a solid electrolyte of 2.5 $LiI\bullet Li_4P_2S_7$ and a lithium anode. The cells were all constructed the same except for the composition of the cathode materials which are shown in the Table. The $MoS_3$ component of the cathode composition was amorphous. Each cell was isostatically compressed at 80,000 psi, except for cell D which was isostatically compressed at 54,000 psi, as described in U.S. Patent No. 4,477,545. The milli-ampere-hour input for each cell was calculated and is shown in the Table. The cells were continuously discharged across a 50 kohm load at 21°C or across a 30 kohm at 32°C. The milli-ampere-hour output to 1.2 volt cutoff was observed and the data are shown in the Table. Cathode utilization, which is determined by dividing the cathode output by the cathode input and then multiplying by 100, was calculated for each cell and the data obtained are shown in the Table.

| Cell | Cathode Composition | Load kohm | Input (mAh) | Output mAh to 1.2V Cut | Utilization |
|---|---|---|---|---|---|
| A | $MnO_2$ + graphite + 2.5 $LiI \cdot Li_4P_2S_7$ | 50 at 21°C | 72.8 | 1.5 | 2.0% |
| B | $MoS_3$ + 2.5 $LiI \cdot Li_4P_2S_7$ | 50 at 21°C | 64.0 | 7.3 | 11.5% |
| C | $MnO_2$ + $MoS_3$ + 2.5 $LiI \cdot Li_4P_2S_7$ + graphite + Teflon | 50 at 21°C | 66.0 | 57.0 | 86.0% |
| D | $Sb_2S_3$ + 2.5 $LiI \cdot Li_4P_2S_7$ + graphite + Teflon | 50 at 21°C | 87.0 | 21.4 | 24.5% |
| E | $Sb_2S_3$ + $MoS_3$ + 2.5 $LiI \cdot Li_4P_2S_7$ + graphite + Teflon | 50 at 21°C | 64.0 | 48.0 | 74.0% |
| F | $Sb_2S_3$ + $MoS_3$ + 2.5 $LiI \cdot Li_4P_2S_7$ + graphite + Teflon | 30 at 32°C | 64.0 | 48.0 | 74.0% |

When the cathode composition ($MnO_2$) of Cell A was combined with the cathode composition ($MoS_3$) of Cell B and Teflon was added, a cathode composition ($MnO_2$ + $MoS_3$) was produced as shown in the Table for Cell C. The milli-ampere-hour output to a 1.2 volt cutoff increased from 7.3 mAh for Cell B to 57.0 mAh for Cell C. This drastic increase demonstrates the synergistic effect obtained when using the combination of $MnO_2$ and amorphous $MoS_3$ as a solid cathode in accordance with this invention. In a like manner when the cathode composition ($MoS_3$) of Cell B was combined with the cathode composition ($Sb_2S_3$) of Cell D to produce the cathode composition ($MoS_3$ + $Sb_2S_3$) of Cell E, the milli-ampere-hour output to a 1.2 volt cutoff increased from 21.4 mAh for Cell D to 48.0 mAh for Cell E. This drastic increase again demonstrates the synergistic effect obtained using the combination of amorphous $MoS_3$ and $Sb_2S_3$ as a solid cathode in accordance with this invention. Cell F was made identical to Cell E but was discharged across a 30 kohm load at a temperature of 32°C. The milli-ampere-output observed for Cell F was the same as that observed for Cell E even though Cell F was discharged at a higher temperature.

It should be understood that the foregoing disclosure relates to preferred embodiments of the invention and it is intended to cover all changes and modifications of the invention which do not depart from the spirit and scope of the appended claims.

## Claims

1. A solid state cell employing an anode, a solid electrolyte and a solid cathode, said solid cathode comprising $MoS_3$ in conjunction with a material selected from the group consisting of $MnO_2$, $Sb_2S_3$ and mixtures thereof.

2. The solid state cell of claim 1 wherein the solid cathode comprises $MoS_3$ plus $MnO_2$.

3. The solid state cell of claim 1 wherein the solid cathode comprises $MoS_3$ plus $Sb_2S_3$.

4. The solid state cell of claim 1, 2 or 3 wherein a conductive agent is added to the solid cathode.

5. The solid state cell of claim 4 where a binder is added to the solid cathode.

6. The solid state cell of claim 4 wherein the anode is selected from the group consisting of lithium, lithium alloy, sodium, potassium, rubidium, and silver.

7. The solid state cell of claim 6 wherein the solid electrolyte is selected from the group consisting of $2.5LiI \bullet Li_4P_2S_7$, $0.75LiI \bullet Li_2SiS_3$, $0.1875Li_2CO_3 \bullet Li_2SiS_3$, $0.25LiBr \bullet 0.1875Li_2CO_3 \bullet Li_2SiS_3$, $0.375Li_2O \bullet Li_2SiS_3$, $0.75LiOH \bullet Li_2SiS_3$, $0.5LiBr \bullet 0.375Li_2CO_3 \bullet Li_2SiS_3$, and $0.375Li_2SiO_3 \bullet Li_2SiS_3$.

8. The solid state cell of claim 5 wherein the anode is selected from the group consisting of lithium, lithium alloy, sodium, potassium, rubidium, and silver.

9. The solid state cell of claim 8 wherein the solid electrolyte is selected from the group consisting of $2.5LiI \bullet Li_4P_2S_7$, $0.75LiI \bullet Li_2SiS_3$, $0.1875Li_2CO_3 \bullet Li_2SiS_3$, $0.25LiBr \bullet 0.1875Li_2CO_3 \bullet Li_2SiS_3$, $0.375Li_2O \bullet Li_2SiS_3$, $0.75LiOH \bullet Li_2SiS_3$, $0.5LiBr \bullet 0.375Li_2CO_3 \bullet Li_2SiS_3$, and $0.375Li_2SiO_3 \bullet Li_2SiS_3$.

10. The solid state cell of claim 2 wherein the anode is lithium and the solid electrolyte is $2.5LiI \bullet Li_4P_2S_7$.

11. The solid state cell of claim 2 wherein the anode is lithium and the solid electrolyte is $0.75LiI \bullet Li_2SiS_3$.

12. The solid state cell of claim 3 wherein the anode is lithium and the solid electrolyte is $2.5LiI \bullet Li_4P_2S_7$.

13. The solid state cell of claim 3 wherein the anode is lithium and the solid electrolyte is $0.75LiI \bullet Li_2SiS_3$.